# EUROPEAN PATENT APPLICATION

(11) **EP 4 362 177 A2**
(43) Date of publication of application: **01.05.2024**
(21) Application number: 23201352.4
(22) Date of filing: 03.10.2023
(51) Int. Cl.: H01M 50/107, H01M 50/152, H01M 50/167, H01M 50/179, H01M 50/474, H01M 50/536, H01M 50/538, H01M 50/559, H01M 50/566

(54) **CYLINDRICAL SECONDARY BATTERY**

(30) Priority: 04.10.2022 KR 20220126041
(71) Applicant: Samsung SDI Co., Ltd., Yongin-si, Gyeonggi-do 17084 (KR)
(72) Inventor: PARK, Gun Gue, 17084 Yongin-si (KR); KO, Sung Gwi, 17084 Yongin-si (KR)
(74) Representative: Marks & Clerk LLP

(57) **Abstract**

A cylindrical secondary battery includes: an electrode assembly including a first electrode plate, a separator, and a second electrode plate; a case in which the electrode assembly is accommodated, and which includes a lower end and is electrically connected to the second electrode plate; a first current collector plate which is between an upper surface of the electrode assembly and the case and is electrically connected to the first electrode plate; a terminal which penetrates an upper surface of the case and includes a lower end electrically and mechanically coupled to an upper surface of the first current collector plate; and a cap plate which seals the lower end of the case, and the terminal includes a welding groove having a depth downward from an upper surface of the terminal.

## Description

### BACKGROUND

### 1. Field

Aspects of embodiments of the present disclosure relate to a cylindrical secondary battery.

### 2. Description of the Related Art

In general, a cylindrical secondary battery includes a cylindrical electrode assembly, a cylindrical can accommodating the electrode assembly and an electrolyte, and a cap assembly coupled to a first-side opening of the can to seal the can and electrically connected to the electrode assembly to become a means for electrically connecting the electrode assembly and an external structure.

In the case of a battery module using a plurality of connected cylindrical secondary batteries, bus bars should be connected to upper and lower parts of the secondary batteries, respectively, but there are problems in that the structure is complicated and the process time is increased.

As such, the can may be provided with a terminal hole on an open side and an opposite side, and a rivet terminal of a positive electrode is coupled to the can to have an insulated structure in the terminal hole. In this structure, since bus bars are provided on the same side of a secondary battery, the bus bars can be easily connected in a secondary battery module.

However, in order to connect the rivet terminal and the current collector plate of the electrode assembly, welding is required through the winding core of the electrode assembly, and metal foreign substances, such as fumes or spatter, may be generated inside the battery. In addition, when a metal foreign substance is generated, additional work for collecting dust is required to remove the generated metal foreign substance. In addition, damage to the electrode assembly may occur due to welding heat.

The above information disclosed in this Background section is provided for enhancement of understanding of the background of the invention and, therefore, it may contain information that does not constitute prior art.

### SUMMARY

According to an aspect of embodiments of the present disclosure, a cylindrical secondary battery is provided in which, through a welding groove provided in a terminal, the thickness of the terminal is reduced to perform welding with a current collector plate from the outside of the terminal. According to another aspect of embodiments of the present disclosure, a cylindrical secondary battery is provided in which a terminal and a collector plate can be welded to each other from the outside of a case through a welding groove provided in the terminal, and, thus, welding impurities can be prevented or substantially prevented from being generated inside the case or an electrode assembly can be prevented or substantially prevented from being damaged due to welding heat.

According to one or more embodiments of the present disclosure, a cylindrical secondary battery includes: an electrode assembly including a first electrode plate, a separator, and a second electrode plate; a case in which the electrode assembly is accommodated, and which includes a lower end and is electrically connected to the second electrode plate; a first current collector plate which is between an upper surface of the electrode assembly and the case and is electrically connected to the first electrode plate; a terminal which penetrates an upper surface of the case and includes a lower end electrically and mechanically coupled to an upper surface of the first current collector plate; and a cap plate which seals the lower end of the case, and the terminal includes a welding groove having a depth downward (e.g. in a direction towards the first collector plate) from an upper surface of the terminal.

The terminal may include: a head located on an upper portion of the upper surface of the case; and a fastening part extending from the center of the head toward the inside of the case and integrally formed with the head.

The first current collector plate may be welded from the outside of the terminal through the welding groove in a state in which the upper surface of the first current collector plate is in contact with a lower surface of the fastening part, such that a welding bead is located in the welding groove.

The thickness of the fastening part, which is a thickness from the lower surface of the welding groove to the lower surface of the fastening part, may be 0.5 mm to 1.5 mm.

The welding groove may pass through the center of the head and may be formed downward (e.g. in a direction towards the first collector plate) from an upper portion of the fastening part.

The head may have a larger plane size than the fastening part.

The fastening part may include: an upper fastening part connected to the head and located in a terminal hole of the upper surface of the case; and a lower fastening part extending downward (e.g. in a direction towards the first collector plate) from the upper fastening part and located inside the case.

The lower fastening part may have a larger outer diameter than the upper fastening part.

The lower fastening part may have a smaller outer diameter than the upper fastening part, and a groove may be provided on an outer surface of the lower fastening part in an inward direction.

The cylindrical secondary battery may further include a coupling member inserted into and coupled to the groove provided on the outer surface of the lower fastening part.

The lower fastening part may have a larger side portion thickness than the upper fastening part.

The side portion thickness of the fastening part may be larger than a lower portion thickness of the fastening part.

A thickness of the first current collector plate may be smaller than the lower portion thickness of the fastening part.

The first current collector plate may have a thickness of 0.2 mm to 1.5 mm.

A lower surface of the terminal may be a flat plane.

A central region of the lower surface of the terminal may protrude inward relative to an edge region thereof.

The central region of the lower surface of the terminal may be a flat plane.

The welding groove may have an upper inner diameter larger than a lower inner diameter thereof.

In the welding groove, the upper inner diameter may be 2 mm to 5 mm, and the lower inner diameter may be 0.5 mm to 2 mm.

The cylindrical secondary battery may further include a first gasket between the terminal and the case.

The cylindrical secondary battery may further include an outer insulation member between the head of the terminal and the upper surface of the case.

An end of the outer insulation member may protrude further than the head.

The first gasket may extend between the head and the upper surface of the case, and an end thereof may protrude further than the head.

The first gasket may be in contact with the upper surface of the case and a lower surface of the terminal.

The case may include, with respect to the cap plate: a beading part which is recessed into the case at an upper portion; and a crimping part in which the lower end of the case is bent inward to fix the cap plate.

The cylindrical secondary battery may further include a second gasket between the cap plate and the beading part and between the cap plate and the crimping part, and the cap plate may be non-polar.

A lower end of the second gasket may protrude more toward the center of the cap plate than the crimping part.

The cap plate may include an edge region between the crimping part and the beading part, and a central region that is concave toward the inside of the case relative to the edge region.

The cap plate may include a vent, which is a notch formed in an upper direction from a lower surface in the central region.

A thickness of the vent may be smaller than thicknesses of other regions of the cap plate and may be in a range of 0.05 mm to 0.35 mm.

The vent may have one or more patterns in which a planar shape has a ring shape, a straight-line shape, or a curve shape, spaced from the center.

The cylindrical secondary battery may further include a second current collector plate, which has a circular plate shape corresponding to a lower surface of the electrode assembly and being in contact with and electrically connected to the second electrode plate exposed to the lower surface of the electrode assembly.

The second current collector plate may include: a circular planar portion contacting a lower surface of the electrode assembly; and an extension portion extending downward (e.g. in a direction away from an upper surface of the case) from an edge of the planar portion.

The extension portion of the second current collector plate may be between the second gasket and the beading part.

The extension portion of the second current collector plate may be bent or rounded along the beading part.

A hole penetrating between an upper surface and a lower surface may be provided at a center of the planar portion of the second current collector plate.

The case may include: an upper surface portion shaped of a flat plate and having a terminal hole passing through a central portion; and a side surface portion extending downward from an edge of the upper surface portion.

The cylindrical secondary battery may further include an inner insulation member covering an inner surface of the upper surface portion of the case.

The inner insulation member may have a larger plane size than the first current collector plate.

The case may further include a bent portion bent in a rounded shape between the upper surface portion and the side surface portion.

The inner insulation member may cover an inner surface of the upper surface portion and an inner surface of the bent portion.

In the electrode assembly, a positive electrode uncoated portion that is not coated with a positive electrode active material may protrude upward (e.g. in a direction towards the upper surface of the case) from the first electrode plate, and a negative electrode uncoated portion that is not coated with a negative electrode active material may protrude downward (e.g. in a direction away from the upper surface of the case) from the second electrode plate.

The electrode assembly may include a step that is concave at outermost parts of the upper and/or lower portions relative to other regions thereof.

At least some of the above and other features of the invention are set out in the claims.

### BRIEF DESCRIPTION OF DRAWINGS

FIG. 1 is a perspective view showing a cylindrical secondary battery according to one or more embodiments of the present disclosure.
FIG. 2 is a cross-sectional view of the cylindrical secondary battery shown in FIG. 1.
FIG. 3 is an enlarged cross-sectional view of a region "3" of FIG. 2.
FIG. 4 is a bottom perspective view illustrating a configuration in which a second collector plate is coupled to a lower portion of a case in the cylindrical secondary battery of FIG. 1.
FIG. 5 is a cross-sectional view of a cylindrical secondary battery according to one or more embodiments of the present disclosure.
FIG. 6 is a cross-sectional view of a cylindrical secondary battery according to one or more embodiments of the present disclosure.

### DETAILED DESCRIPTION

Herein, some example embodiments of the present disclosure will be described in further detail with reference to the accompanying drawings.

Examples of the present disclosure are provided to more completely explain the present disclosure to those skilled in the art; however, the following examples may be modified in various other forms, and the present disclosure should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms "comprise" or "include" and/or "comprising" or "including," when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections are not to be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Example embodiments of the present disclosure will be described in further detail with reference to the accompanying drawings to the extent that those skilled in the art can easily practice the present disclosure.

Here, the same reference numerals are assigned to parts having similar configurations and operations throughout the specification. In addition, when a part is said to be electrically coupled to another part, this includes not only a case in which it is directly connected but also a case in which it is connected with another element interposed therebetween.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

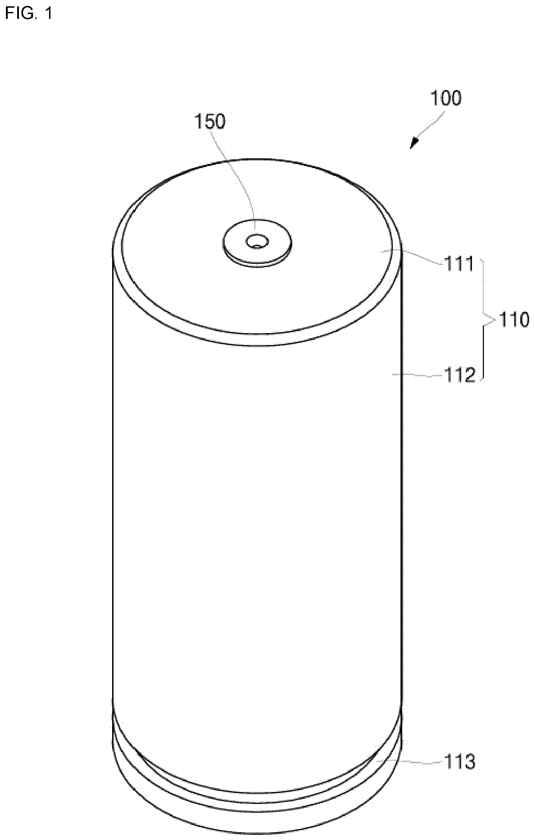

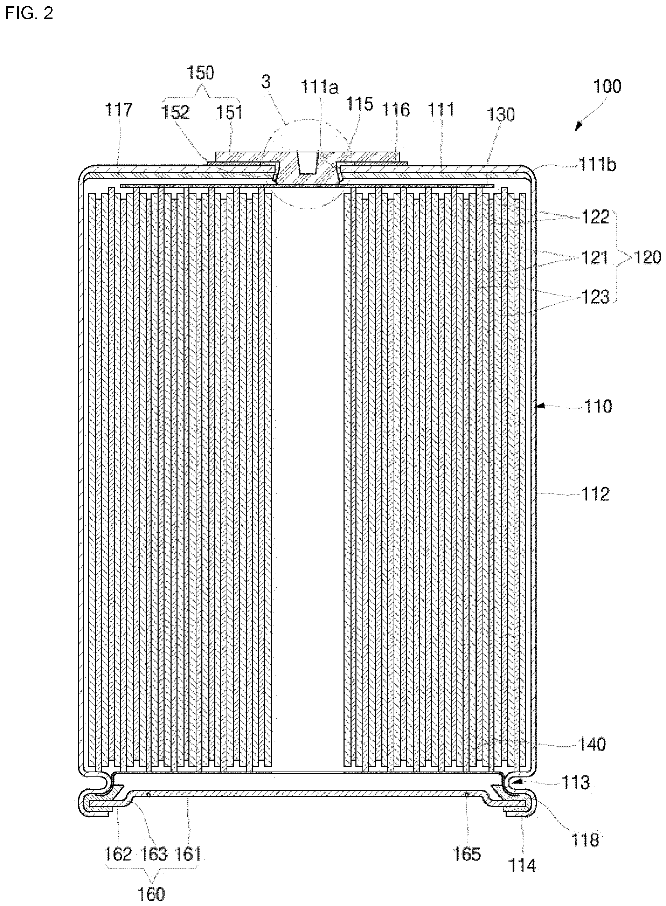

FIG. 1 is a perspective view showing a cylindrical secondary battery 100 according to one or more embodiments of the present disclosure; and FIG. 2 is a cross-sectional view of the cylindrical secondary battery 100 shown in FIG. 1.

As shown in FIGS. 1 and 2, the cylindrical secondary battery 100 according to an embodiment of the present disclosure may include a case 110, an electrode assembly 120 accommodated inside the case 110, a terminal 150 coupled to a terminal hole provided at an end of the case 110, and a cap plate 160 that seals an opening of an opposite end of the case 110.

The case 110 includes a circular upper side portion 111 and a side surface portion 112 extending by a length (e.g., a predetermined length) downward from an edge of the upper side portion 111. In an embodiment, the upper side portion 111 and the side surface portion 112 of the case 110 may be integrally formed. In an embodiment, a bent portion 111b that is bent in a rounded shape may be further included between the upper side portion 111 and the side surface portion 112.

The circular upper side portion 111 may have a flat circular plate shape and may include a terminal hole 111a penetrating a central portion thereof. The upper side portion 111 may be coupled by inserting the terminal 150 into the terminal hole 111a. A first gasket 115 for sealing and electrical insulation may be interposed between the terminal hole 111a and the terminal 150. The first gasket 115 may electrically separate the terminal 150 and the case 110 from each other by blocking a contact therebetween. The first gasket 115 may seal the terminal hole 111a of the upper side portion 111 of the case 110. The first gasket 115 may be made of a resin material, such as polyethylene (PE), polypropylene (PP), or polyethylene terephthalate (PET).

In an embodiment, the case 110 may further include an inner insulation member 117 provided to cover an inner surface of the upper side portion 111. Here, the inner insulation member 117 may be attached to the inner surface of the upper side portion 111 by coating or bonding. Here, the inner surface of the upper side portion 111 is a surface facing an upper surface of the electrode assembly 120, and may be a lower surface of the upper side portion 111. The inner insulation member 117 may prevent or substantially prevent contact between the upper side portion 111 of the case 110 and a first electrode plate (e.g., a positive electrode plate) 121 of the electrode assembly 120. As another example, the inner insulation member 117 may extend to an inner surface of the bent portion 111b. The inner insulation member 117 may be provided to cover inner surfaces of the upper side portion 111 and the bent portion 111b, or may be provided to cover only the inner surface of the upper side portion 111.

In the cylindrical secondary battery 100, a lower part of the case 110 is opened or open during a manufacturing process. Therefore, in the cylindrical secondary battery 100, the electrode assembly 120 may be inserted through the open lower part of the case 110 together with an electrolyte during the manufacturing process. Here, the case 110 may be inserted with the electrolyte and the electrode assembly 120 in a state in which the lower part thereof is open and faces upward. In the case 110, after the electrolyte and the electrode assembly 120 are inserted, the cap plate 160 may be coupled to the open lower end to seal the inside of the case 110. The electrolyte enables movement of lithium ions between the first electrode plate 121 and a second electrode plate (e.g., a negative electrode plate) 122 constituting the electrode assembly 120. The electrolyte may be a non-aqueous organic electrolyte that is a mixture of lithium salt and a high-purity organic solvent. In an embodiment, the electrolyte may be a polymer using a polymer electrolyte or a solid electrolyte, but the type of electrolyte is not limited herein.

The case 110 may be made of steel, a steel alloy, aluminium, an aluminium alloy, or an equivalent thereof, but the material is not limited herein. In an embodiment, the case 110 may have an inwardly recessed beading part 113 formed on an upper part and an inwardly bent crimping part 114 formed on a lower part, with respect to the cap plate 160, thereby preventing or substantially preventing the electrode assembly 120 from escaping to the outside.

In the case 110, after the electrode assembly 120 is inserted through the open lower part, the beading part 113 may be formed to prevent or substantially prevent the electrode assembly 120 from being separated from the case 110.

The electrode assembly 120 includes the first electrode plate 121, the second electrode plate 122, and a separator 123. The first electrode plate 121 may be a positive electrode plate, and the second electrode plate 122 may be a negative electrode plate. Of course, the reverse is also possible. Herein, for convenience of description, a case in which the first electrode plate 121 is a positive electrode plate and the second electrode plate 122 is a negative electrode plate will be described.

In an embodiment, the first electrode plate 121 may have a positive electrode active material made of a transition metal oxide coated on at least one surface of a plate-shaped metal foil made of aluminium (Al). In addition, the first electrode plate 121 may have a positive electrode uncoated portion not coated with a positive electrode active material at an upper portion thereof. Such a positive electrode uncoated portion may protrude upward from the electrode assembly 120 (e.g. in a direction towards the upper side portion 111). That is, in the first electrode plate 121, the positive electrode uncoated portion may protrude more upward than the second electrode plate 122 and the separator 123 (e.g. in a direction towards the upper side portion 111).

In an embodiment, the second electrode plate 122 may have a negative electrode active material made of graphite or carbon coated on at least one surface of a plate-shaped metal foil made of copper (Cu) or nickel (Ni). In addition, the second electrode plate 122 may have a negative electrode uncoated portion not coated with a negative electrode active material at a lower portion. Such a negative electrode uncoated portion may protrude downward from the electrode assembly 120 (e.g. in a direction away from the upper side portion 111). That is, in the second electrode plate 122, the negative electrode uncoated portion may protrude more downward than the first electrode plate 121 and the separator 123 (e.g. in a direction away from the upper side portion 111).

The separator 123 may be made of polyethylene (PE) or polypropylene (PP), but is not limited thereto in the present disclosure. The separator may prevent or substantially prevent an electrical short between the first electrode plate 121 and the second electrode plate 122 and allow only the movement of lithium ions.

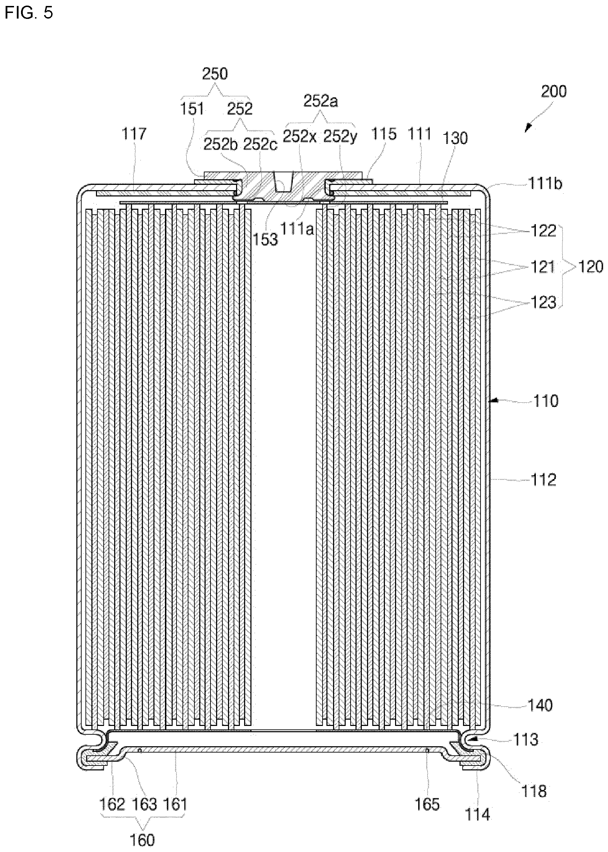

After the electrode assembly 120 is stacked with the first electrode plate 121, the second electrode plate 122, and the separator 123, the electrode assembly 120 is wound from a winding end to have a substantially cylindrical shape. In addition, in the electrode assembly 120, the positive electrode uncoated portion, which is not coated with the positive electrode active material, protrudes from the first electrode plate 121 in an upward direction (e.g. in a direction towards the upper side portion 111), and the negative electrode uncoated portion, which is not coated with the negative electrode active material, protrudes downward from the second electrode plate 122 (e.g. in a direction away from the upper side portion 111). In an embodiment, in the electrode assembly 120, like in the electrode assembly shown in FIG. 5, an outermost positive electrode uncoated portion may not protrude upward (e.g. in a direction towards the upper side portion 111) and/or an outermost negative electrode uncoated portion may not protrude downward (e.g. in a direction away from the upper side portion 111). That is, the electrode assembly 120 may have a step that is concave at the upper and/or lower outermost portions compared to other regions. In the electrode assembly 120, when the inner insulation member 117 is not formed on the bent portion 111b of the case 110, the electrode assembly 120 and the case 110 may be prevented or substantially prevented from contacting each other.

A first current collector plate 130 may be a circular metal plate having a shape corresponding to the upper surface of the electrode assembly 120. A plane size of the first current collector plate 130 may be equal to or smaller than the size of the upper surface of the electrode assembly 120. In an embodiment, the first current collector plate 130 may be made of aluminium (Al). The first current collector plate 130 may be fixed and electrically connected to the first electrode plate 121 exposed on the upper side of the electrode assembly 120 by welding while the lower surface is in contact with the upper surface of the electrode assembly 120. The first current collector plate 130 may be fixed and electrically connected to the terminal 150 by welding in a state in which the upper surface thereof is in contact with a lower surface of the terminal 150. The first current collector plate 130 serves as a passage for current flow between the first electrode plate 121 of the electrode assembly 120 and the terminal 150. The first current collector plate 130 may be welded to the electrode assembly 120, stored in the case 110, and then welded to the terminal 150. In an embodiment, the first current collector plate 130 may have a thickness of 0.2 mm to 1.5 mm. The thickness of the first current collector plate 130 may be smaller than a lower thickness A of a fastening part 152 of the terminal 150 to improve weldability.

A second current collector plate 140 may include a circular planar portion 141 corresponding to a lower surface of the electrode assembly 120 and an extension portion 142 extending downward (e.g. in a direction away from the upper side portion 111) from an edge of the planar portion 141. An upper surface of the planar portion 141 may be in contact with the lower surface of the electrode assembly 120. An upper surface of the planar portion 141 may be fixed and electrically connected to the second electrode plate 122 exposed to the lower portion of the electrode assembly 120 by welding in a state in which the upper surface is in contact with the lower surface of the electrode assembly 120.

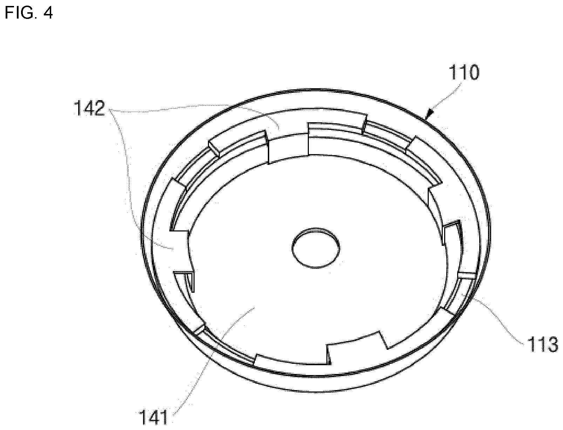

The extension portion 142 may extend downward (e.g. in a direction away from the upper side portion 111) from an edge of the planar portion 141. For example, the extension portion 142 may include a plurality of extension portions so as to be spaced apart from each other along an edge of the planar portion 141. FIG. 4 shows a bottom perspective view showing a state in which the second current collector plate 140 is seated on the beading part 113 after the beading part 113 of the case 110 is formed. As shown in FIG. 4, the extension portion 142 is shown as having four extension portions which are symmetrical to each other around the planar portion 141, but is not limited thereto in the present disclosure. The extension portion 142 may be bent downward (e.g. in a direction away from the upper side portion 111) from the edge of the planar portion 141 to extend. In addition, the extension portion 142 may be in contact with an inner surface of the beading part 113. That is, the extension portion 142 may be rounded or bent along the beading part 113. Here, the inner surface may be an inner surface of the case 110. The extension portion 142 may have an end positioned between the beading part 113 and a second gasket 118. The extension portion 142 may be in contact with and be coupled to the beading part 113 of the case 110. For example, the extension portion 142 may be coupled by welding in a state of being in contact with the inner surface of the beading part 113 of the case 110. The second current collector plate 140 serves as a passage for current flow between the second electrode plate 122 of the electrode assembly 120 and the case 110. That is, the case 110 may be a negative electrode terminal. In an embodiment, the second current collector plate 140 may have a hole formed at the center of the planar portion 141 to penetrate between an upper surface and a lower surface thereof, and an electrolyte may be easily injected into the electrode assembly 120 through the hole.

The terminal 150 may be inserted into the terminal hole 111a provided in the upper side portion 111 of the case 110 and electrically connected to the first current collector plate 130. The terminal 150 may be electrically connected to the first electrode plate 121 of the electrode assembly 120 through the first current collector plate 130. That is, the terminal 150 may be a positive electrode terminal. The terminal 150 and the case 110 may have different polarities. The terminal 150 may be made of the same or similar material as the first current collector plate 130 and the first electrode plate 121. In the terminal 150, a diameter of a portion exposed to an upper portion of the case 110 and a diameter of a lower surface 152a located inside the case 110 may be larger than a diameter thereof located in the terminal hole 111a.

The terminal 150 may include a head 151 at a portion exposed to the upper portion of the case 110 and a fastening part 152 extending from the center of the head 151 toward the inside of the case 110. The head 151 may have a larger plane size than the fastening part 152. In the terminal 150, an upper end of the fastening part 152 may be connected to a lower surface of the head 151, and the head 151 and the fastening part 152 may be integrally formed. The terminal 150 may be coupled to the terminal hole 111a of the case 110 from the outside to the inside. Here, the first gasket 115 may be interposed between the terminal 150 and the case 110. The fastening part 152 may have a lower portion compression-deformed (compression molded) by riveting, to seal the terminal hole 111a by pressing the first gasket 115. Here, the fastening part 152 may have a diameter gradually increasing from the terminal hole 111a toward the inside of the case 110. The fastening part 152 may include an upper fastening part 152b located in the terminal hole 111a of the case 110 and a lower fastening part 152c located inside the case 110. The lower fastening part 152c may have a larger diameter than the upper fastening part 152b. That is, the lower fastening part 152c may overlap the case 110 in a plan view. In an embodiment, in the fastening part 152, the diameter of the lower surface 152a may be larger than the diameters at other regions. In an embodiment, the lower surface 152a of the fastening part 152 may be a flat plane.

In an embodiment, an outer insulation member 116 may be further interposed between the head 151 and the upper side portion 111 of the case 110. That is, the head 151 may be located above the upper side portion 111, and the outer insulation member 116 blocking electrical contact may be interposed in a region where the head 151 and the upper side portion 111 overlap in a plan view. In an embodiment, the outer insulation member 116 may be interposed between the head 151 and the upper side portion 111 of the case 110 so as not to overlap the first gasket 115 in a plan view.

The first gasket 115 may be interposed between the fastening part 152 and the terminal hole 111a of the case 110, and an upper end thereof may extend between the head 151 and the upper side portion 111 of the case 110. In an embodiment, the end of the upper end of the first gasket 115 may be in contact with an outer insulation member 116. That is, the first gasket 115 and the outer insulation member 116 may be interposed between the terminal 150 and the case 110 to electrically insulate and seal the terminal 150 and the case 110. In an embodiment, the first gasket 115 and the outer insulation member 116 may be integrally formed as the first gasket 115, as shown in FIG. 5. The first gasket 115 may be in contact with the upper and lower surfaces of the upper side portion 111 of the case 110. The first gasket 115 may be in contact with the inner insulation member 117.

The terminal 150 may include a welding groove 153 having a certain depth in a direction from an upper surface portion of the head 151 to the fastening part 152. In an embodiment, the welding groove 153 may pass through the center of the head 151 and be formed downward (e.g. in a direction towards the first collector plate 130) from an upper portion of the fastening part 152. A height of the welding groove 153 may be smaller than the total height of the terminal 150. That is, since the terminal 150 includes the welding groove 153, the fastening part 152 of the terminal 150 may have a reduced lower thickness A. Here, the lower thickness A of the fastening part 152 may correspond to a thickness from a lower inner surface 153a of the welding groove 153 to the lower surface 152a of the fastening part 152. The lower thickness A of the fastening part 152 is reduced by the welding groove 153, and, thus, the terminal 150 and the first current collector plate 130 may be welded from the outside of the case 110.

In an embodiment, the lower thickness A of the fastening part 152 may be 0.5 mm to 1.5 mm. When the lower thickness A of the fastening part 152 is less than 0.5 mm, it may be difficult to maintain the rigidity of the case 110. In addition, when the lower thickness A of the fastening part 152 is greater than 1.5 mm, it may not be easy to weld between the terminal 150 and the first current collector plate 130 outside the case 110.

In an embodiment, in the welding groove 153, an upper inner diameter B may be larger than a lower inner diameter C. In addition, the welding groove 153 may have a smaller lower inner diameter C than the terminal hole 111a. In an embodiment, the lower inner diameter C of the welding groove 153 may be 0.5 mm to 2 mm. When the lower inner diameter C of the welding groove 153 is less than 0.5 mm, welding with the first current collector plate 130 may not be easy due to an insufficient welding area. In addition, when the lower inner diameter C of the welding groove 153 is greater than 2 mm, riveting may not be easy due to an increase in the size and a decrease in the rigidity of the terminal 150. In an embodiment, the upper inner diameter B of the welding groove 153 may be 2 mm to 5 mm. When the upper inner diameter B of the welding groove 153 is less than 2 mm, it may not be easy to secure a welding area, and the head 151 may be damaged during welding outside the welding groove 153. In addition, when the upper inner diameter B of the welding groove 153 is greater than 5 mm, riveting may not be easy due to an increase in the size and a decrease in the rigidity of the terminal 150.

In an embodiment, since the upper inner diameter B of the welding groove 153 is larger than the lower inner diameter C, in the upper fastening part 152b, a side portion thickness D2 may be larger in the lower fastening part 152c located inside the case 110 than a side portion thickness D1 of the upper fastening part 152c. Here, the side portion thicknesses D1 and D2 may be the shortest straight-line distances from the outer surface of the fastening part 152 to the welding groove 153. In an embodiment, the side portion thicknesses D1 and D2 of the fastening part 152 may be larger than the lower thickness A.

In an embodiment, since the terminal 150 includes the welding groove 153, even when welding is performed with the first current collector plate 130 from the outside of the terminal 150, a welding bead is provided inside the welding groove 153, thereby preventing or substantially preventing the bead from protruding from the terminal 150. Here, the terminal 150 may be bonded by welding in a state in which the flat lower surface 152a is in contact with the upper surface of the first current collector plate 130.

In addition, since the terminal 150 includes the welding groove 153, welding with the first current collector plate 130 can be performed from the outside of the terminal 150, thereby preventing or substantially preventing welding foreign substances from being generated inside the case 110 and preventing or substantially preventing the electrode assembly 120 from being damaged due to welding heat.

The cap plate 160 is a circular metal plate and may be coupled to the lower end of the case 110. A lower surface of the cap plate 160 may be exposed to the outside. The cap plate 160 may be coupled to the lower portion of the case 110 in a state in which the second gasket 118 is interposed therebetween, thereby preventing or substantially preventing the cap plate 160 from being electrically connected to the case 110. Since the cap plate 160 is not electrically connected to the positive electrode or the negative electrode of the electrode assembly 120, there may be no separate electrical polarity.

The cap plate 160 may be fixed in a state in which an edge portion 162, or edge region, thereof is positioned between the beading part 113 and the crimping part 114 of the case 110. In further detail, in a state in which the second gasket 118 is interposed under the beading part 113 of the case 110, the cap plate 160 may be seated thereon. Thereafter, the crimping part 114 of the case 110 may be bent toward the inside of the cap plate 160 to press the second gasket 118, thereby coupling the cap plate 160 and the case 110 to each other. The second gasket 118 may be made of a resin material, such as polyethylene (PE), polypropylene (PP), or polyethylene terephthalate (PET). The second gasket 118 may press and seal a region between the case 110 and the cap plate 160 and may prevent or substantially prevent the cap plate 160 from being separated from the case 110. The second gasket 118 may have an upper portion interposed between the beading part 113 and the cap plate 160 and a lower portion interposed between the crimping part 114 and the cap plate 160. A lower end of the second gasket 118 may protrude more toward the center of the cap plate 160 compared to the crimping part 114.

The cap plate 160 may include a central region 161 located below the second current collector plate 140 and the edge region 162 interposed between the beading part 113 and the crimping part 114 of the case 110 and coupled to the case 110. In an embodiment, the center region 161 of the cap plate 160 may be concavely recessed toward the inside of the case 110, compared to the edge region 162. That is, the edge region 162 of the cap plate 160 may protrude outward from the case 110, compared to the central region 161. In addition, the cap plate 160 may further include a connection region 163 that connects the central region 161 to the edge region 162. In an embodiment, the connection region 163 may be inclined due to a step between the central region 161 and the edge region 162. In addition, bent portions may be further provided between the connection region 163 and the central region 161 and between the connection region 163 and the edge region 162.

In an embodiment, a vent 165 may be provided so as to open the central region 161 at a certain pressure (e.g., a set pressure) in the cap plate 160. The vent 165 may have a smaller thickness than other regions of the cap plate 160. In an embodiment, the vent 165 may be a notch formed upward (e.g. in a direction towards the upper side portion 111) from the lower surface of the cap plate 160.

That is, in the cylindrical secondary battery 100, when excessive internal pressure is generated inside the case 110, the vent 165 may be ruptured, such that the excessive internal pressure can be discharged. In an embodiment, the vent 165 of the cap plate 160 may be spaced apart from the center and may have a ring shape in a plan view. In an embodiment, the vent 165 may have at least one pattern having a straight or curved shape in a plan view. The thickness of the vent 165 may be smaller than the thicknesses of other regions of the cap plate 160. In an embodiment, the vent 165 may have a thickness of 0.05 mm to 0.35 mm. When the thickness of the vent 165 is less than 0.05 mm, deformation or cracks may occur even if the internal pressure of the cylindrical secondary battery 100 does not increase, and when the thickness of the vent 165 exceeds 0.35 mm, the vent 165 may not be ruptured even if the internal pressure of the cylindrical secondary battery 100 increases, such that the vent 165 may not properly operate as a safety vent.

Referring to FIG. 5, a cylindrical secondary battery 200 according to one or more embodiments of the present disclosure is shown.

The cylindrical secondary battery 200 shown in FIG. 5 may include a case 110, an electrode assembly 120 accommodated inside the case 110, a terminal 250 coupled to a terminal hole provided at an end of the case 110, and a cap plate 160 that seals an opening of an opposite end of the case 110. In addition, the cylindrical secondary battery 200 may include a first current collector plate 130 electrically connecting the first electrode plate 121 of the electrode assembly 120 and the terminal 250 to each other, and a second current collector plate 140 electrically connecting the case 110 and the second electrode plate 122 of the electrode assembly 120 to each other.

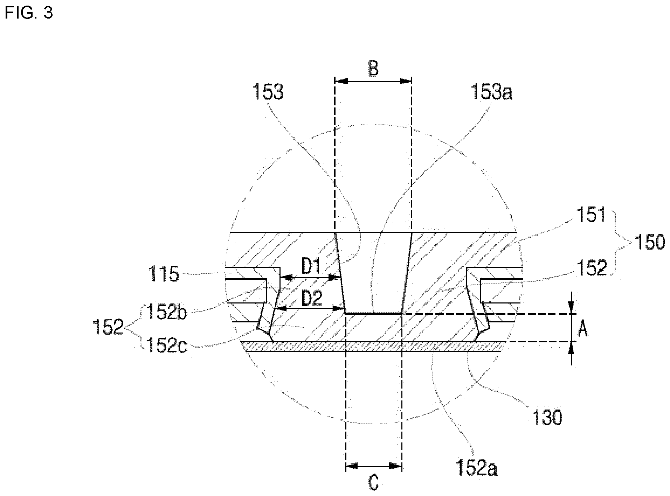

The cylindrical secondary battery 200 may be the same as the cylindrical secondary battery 100 shown in FIGS. 1 to 4 in terms of the case 110, the electrode assembly 120, the first current collector plate 130, the second current collector plate 140, and the cap plate 160. In addition, the terminal 250 of the cylindrical secondary battery 200 may be similar to the terminal 150 of the cylindrical secondary battery 100 shown in FIGS. 1 to 4, in terms of structure, but a difference may exist with respect to the shape of a lower surface 252a of a fastening part 252.

Therefore, the cylindrical secondary battery 200 will be mainly described with regard to the structure of the lower surface 252a of the fastening part 252 of the terminal 250, which is different from that of the cylindrical secondary battery 100.

The fastening part 252 may include an upper fastening part 252b located in the terminal hole 111a of the case 110 and a lower fastening part 252c located inside the case 110. The lower surface 252a of the fastening part 252 may have a central region 252x, and an edge region 252y located outside the central region 252x, the central region 252x protruding downward to be in contact with and welded to an upper surface of the first current collector plate 130, and the edge region 252y compression-deformed (compression molded) by riveting and positioned at an upper side relative to the central region 252x. In an embodiment, a size of the central region 252x is larger than the upper and lower inner diameters of a welding groove 153. In an embodiment, in the lower surface 252a of the fastening part 252, the central region 252x may be a flat plane. The terminal 250 may be coupled to the first current collector plate 130 by welding from the outside through the welding groove 253 in a state in which in the lower surface 252a of the fastening part 252, the central region 252x is in contact with an upper surface of the first current collector plate 130.

In addition, in the fastening part 252, the edge region 252y may be compressed and deformed by riveting to press the first gasket 115 and the inner insulation member 117. The edge region 252y may overlap the upper side portion 111 of the case 110 in a plan view.

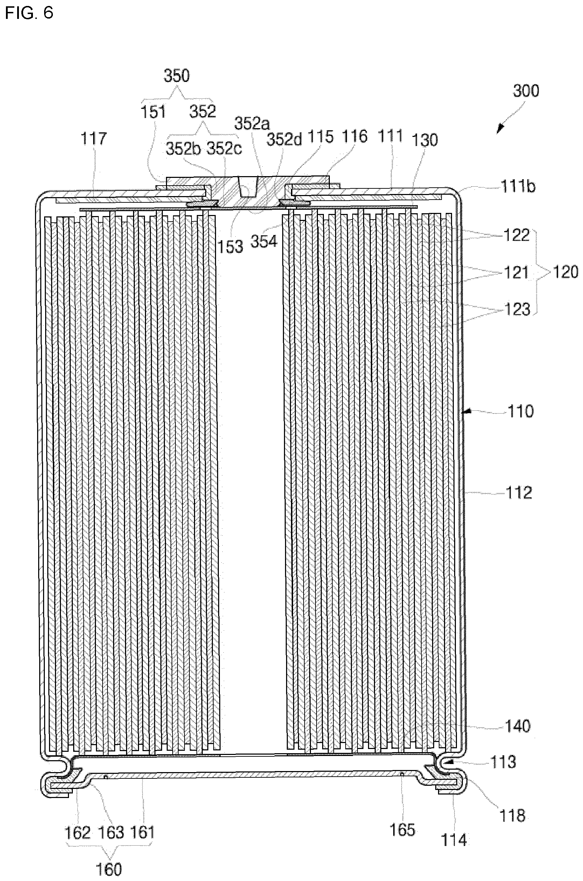

A cylindrical secondary battery 300 according to one or more embodiments of the present disclosure, shown in FIG. 6, may include a case 110, an electrode assembly 120 accommodated inside the case 110, a terminal 350 coupled to a terminal hole provided at an end of the case 110, and a cap plate 160 that seals an opening at an opposite end of the case 110. In addition, the cylindrical secondary battery 300 may include a first current collector plate 130 electrically connecting a first electrode plate 121 of the electrode assembly 120 and the terminal 350 to each other and a second current collector plate 140 connecting the case 110 and a second electrode plate 122 of the electrode assembly 120 to each other.

The cylindrical secondary battery 300 may be the same as the cylindrical secondary battery 100 shown in FIGS. 1 to 4 in terms of the case 110, the electrode assembly 120, the first current collector plate 130, the second current collector plate 140, and the cap plate 160. In addition, the terminal 350 of the cylindrical secondary battery 300 may be similar to the terminal 150 of the cylindrical secondary battery 100 shown in FIGS. 1 to 4, in terms of structure, but a difference may exist with respect to the shape of a lower fastening part 352c of a fastening part 352.

Therefore, the cylindrical secondary battery 300 will be mainly described with regard to the structure of the lower fastening part 352c of the terminal 350, which is different from that of the cylindrical secondary battery 100.

The lower fastening part 352c may have a smaller outer diameter than the upper fastening part 352b. After being inserted into a terminal hole 111a of the case 110 from the outside, the terminal 350 may be fixed by coupling a coupling means 354 to the outside of the lower fastening part 352c located inside the case 110. The coupling means 354 may be made of an insulating material. In the terminal 350, a groove 352d may be provided in the lower fastening part 352c so as to be substantially horizontal in an inward direction. The coupling means 354 may be inserted into the groove 352d of the lower fastening part 352c and coupled to the terminal 350. Here, the coupling means 354 may be fixed to the outside of the lower fastening part 352c and may be in contact with and be closely adhered to a first gasket 115 and an inner insulation member 117. The lower fastening part 352c may have a smaller outer diameter than the upper fastening part 352b.

As described above, in the cylindrical secondary battery according to various embodiments of the present disclosure, since a terminal and a current collector plate can be welded from the outside of a case through a welding groove provided in the terminal, it is possible to prevent or substantially prevent welding impurities from being generated inside the case or an electrode assembly from being damaged due to welding heat.

In addition, in the cylindrical secondary battery according to various embodiments of the present disclosure, since a terminal and a current collector plate are welded to each other within a welding groove of the terminal, a welding bead may be positioned within a terminal groove, and, thus, it is possible to prevent or substantially prevent the terminal from protruding due to the welding bead.

While some example embodiments for carrying out the cylindrical secondary battery according to the present disclosure have been described herein, the present disclosure is not limited thereto, and it will be understood by a person skilled in the art that various changes in form and details may be made therein without departing from the scope of the present disclosure as set forth by the following claims.

The present invention may be defined by reference to the following clauses:
Clause 1. A cylindrical secondary battery comprising:
   an electrode assembly comprising a first electrode plate, a separator, and a second electrode plate;
   a case in which the electrode assembly is accommodated, and which comprises a lower end and is electrically connected to the second electrode plate;
   a first current collector plate which is between an upper surface of the electrode assembly and the case and is electrically connected to the first electrode plate;
   a terminal which penetrates an upper surface of the case and comprises a lower end electrically and mechanically coupled to an upper surface of the first current collector plate; and
   a cap plate which seals the lower end of the case,
   wherein the terminal comprises a welding groove having a depth downward from an upper surface of the terminal.
Clause 2. The cylindrical secondary battery of clause 1, wherein the terminal comprises:
   a head located on an upper portion of the upper surface of the case; and
   a fastening part extending from a center of the head toward an inside of the case and integrally formed with the head.
Clause 3. The cylindrical secondary battery of clause 2, wherein the first current collector plate is welded from an outside of the terminal through the welding groove in a state in which the upper surface of the first current collector plate is in contact with a lower surface of the fastening part, such that a welding bead is located in the welding groove.
Clause 4. The cylindrical secondary battery of clause 3, wherein the first current collector plate has a thickness of 0.2 mm to 1.5 mm.
Clause 5. The cylindrical secondary battery of any one of clauses 2 to 4, wherein a thickness of the fastening part, which is a thickness from a lower surface of the welding groove to a lower surface of the fastening part, is 0.5 mm to 1.5 mm.
Clause 6. The cylindrical secondary battery of any one of clauses 2 to 5, wherein the welding groove passes through the center of the head and is formed downward from an upper portion of the fastening part.
Clause 7. The cylindrical secondary battery of any one of clauses 2 to 6, wherein the head has a larger plane size than the fastening part.
Clause 8. The cylindrical secondary battery of any one of clauses 2 to 7, wherein the fastening part comprises:
   an upper fastening part connected to the head and located in a terminal hole of the upper surface of the case; and
   a lower fastening part extending downward from the upper fastening part and located inside the case.
Clause 9. The cylindrical secondary battery of clause 8, wherein the lower fastening part has a larger outer diameter than the upper fastening part.
Clause 10. The cylindrical secondary battery of clause 8 or clause 9, wherein the lower fastening part has a smaller outer diameter than the upper fastening part, and a groove is provided on an outer surface of the lower fastening part in an inward direction.
Clause 11. The cylindrical secondary battery of clause 10, further comprising a coupling member inserted into and coupled to the groove provided on the outer surface of the lower fastening part.
Clause 12. The cylindrical secondary battery of any one of clauses 8 to 11, wherein the lower fastening part has a larger side portion thickness than the upper fastening part.
Clause 13. The cylindrical secondary battery of any one of clauses 2 to 12, wherein the side portion thickness of the fastening part is larger than a lower portion thickness of the fastening part.
Clause 14. The cylindrical secondary battery of any one of clauses 2 to 13, wherein a thickness of the first current collector plate is smaller than a lower portion thickness of the fastening part.
Clause 15. The cylindrical secondary battery of any one of clauses 2 to 14, further comprising a first gasket between the terminal and the case.
Clause 16. The cylindrical secondary battery of any one of clauses 2 to 15, further comprising an outer insulation member between the head of the terminal and the upper surface of the case.
Clause 17. The cylindrical secondary battery of clause 16, wherein an end of the outer insulation member protrudes further than the head.
Clause 18. The cylindrical secondary battery of clause 15, or clause 16 or clause 17 as dependent on clause 15, wherein the first gasket extends between the head and the upper surface of the case, and an end of the first gasket protrudes further than the head.
Clause 19. The cylindrical secondary battery of clause 15, or clause 16 or clause 17 as dependent on clause 15, or clause 18, wherein the first gasket is in contact with the upper surface of the case and a lower surface of the terminal.
Clause 20. The cylindrical secondary battery of any one of clauses 1 to 19, wherein a lower surface of the terminal is a flat plane.
Clause 21. The cylindrical secondary battery of any one of clauses 1 to 20, wherein a central region of a lower surface of the terminal protrudes inward relative to an edge region thereof.
Clause 22. The cylindrical secondary battery of clause 21, wherein the central region of the lower surface of the terminal is a flat plane.
Clause 23. The cylindrical secondary battery of any one of clauses 1 to 22, wherein the welding groove has an upper inner diameter larger than a lower inner diameter.
Clause 24. The cylindrical secondary battery of clause 23, wherein, in the welding groove, the upper inner diameter is 2 mm to 5 mm, and the lower inner diameter is 0.5 mm to 2 mm.
Clause 25. The cylindrical secondary battery of any one of clauses 1 to 24, wherein the case comprises:
   a beading part which is recessed into the case at an upper portion of the cap plate; and
   a crimping part in which the lower end of the case is bent inward to fix the cap plate at a lower portion of the cap plate.
Clause 26. The cylindrical secondary battery of clause 25, further comprising a second gasket between the cap plate and the beading part and between the cap plate and the crimping part, wherein the cap plate is non-polar.
Clause 27. The cylindrical secondary battery of clause 26, wherein a lower end of the second gasket protrudes more toward a center of the cap plate than the crimping part.
Clause 28. The cylindrical secondary battery of any one of clauses 1 to 27, further comprising a second current collector plate, which has a circular plate shape corresponding to a lower surface of the electrode assembly and being in contact with and electrically connected to the second electrode plate exposed to the lower surface of the electrode assembly.
Clause 29. The cylindrical secondary battery of clause 28, wherein the second current collector plate comprises:
   a circular planar portion contacting the lower surface of the electrode assembly; and
   an extension portion extending downward from an edge of the planar portion.
Clause 30. The cylindrical secondary battery of clause 29, wherein the extension portion of the second current collector plate is between the second gasket and the beading part.
Clause 31. The cylindrical secondary battery of clause 29 or clause 30, wherein the extension portion of the second current collector plate is bent or rounded along the beading part.
Clause 32. The cylindrical secondary battery of any one of clauses 29 to 31, wherein the second current collector plate has a hole penetrating between an upper surface and a lower surface at a center of the planar portion.
Clause 33. The cylindrical secondary battery of any one of clauses 25 to 27, or any one of clauses 28 to 32 as dependent on any one of clauses 25 to 27, wherein the cap plate comprises an edge region between the crimping part and the beading part, and a central region that is concave toward an inside of the case relative to the edge region.
Clause 34. The cylindrical secondary battery of clause 33, wherein the cap plate comprises a vent, which is a notch formed in an upper direction from a lower surface in the central region.
Clause 35. The cylindrical secondary battery of clause 34, wherein a thickness of the vent is smaller than thicknesses of other regions of the cap plate and is in a range of 0.05 mm to 0.35 mm.
Clause 36. The cylindrical secondary battery of clause 34 or clause 35, wherein the vent has one or more patterns in which a planar shape has a ring shape, a straight-line shape, or a curve shape, spaced from the center.
Clause 37. The cylindrical secondary battery of any one of clauses 1 to 36, wherein the case comprises: an upper surface portion shaped of a flat plate and having a terminal hole passing through a central portion; and a side surface portion extending downward from an edge of the upper surface portion.
Clause 38. The cylindrical secondary battery of clause 37, further comprising an inner insulation member covering an inner surface of the upper surface portion of the case.
Clause 39. The cylindrical secondary battery of clause 38, wherein the inner insulation member has a larger plane size than the first current collector plate.
Clause 40. The cylindrical secondary battery of clause 38 or clause 39, wherein the case further comprises a bent portion bent in a rounded shape between the upper surface portion and the side surface portion.
Clause 41. The cylindrical secondary battery of clause 40, wherein the inner insulation member covers an inner surface of the upper surface portion and an inner surface of the bent portion.
Clause 42. The cylindrical secondary battery of any one of clauses 1 to 41, wherein, in the electrode assembly, a positive electrode uncoated portion that is not coated with a positive electrode active material protrudes upward from the first electrode plate, and a negative electrode uncoated portion that is not coated with a negative electrode active material protrudes downward from the second electrode plate.
Clause 43. The cylindrical secondary battery of clause 42, wherein the electrode assembly comprises a step that is concave at outermost parts of upper and lower portions relative to other regions.

## Claims

1. A cylindrical secondary battery comprising:
an electrode assembly comprising a first electrode plate, a separator, and a second electrode plate;
a case in which the electrode assembly is accommodated, and which comprises a lower end and is electrically connected to the second electrode plate;
a first current collector plate which is between an upper surface of the electrode assembly and the case and is electrically connected to the first electrode plate;
a terminal which penetrates an upper surface of the case and comprises a lower end electrically and mechanically coupled to an upper surface of the first current collector plate; and
a cap plate which seals the lower end of the case,
wherein the terminal comprises a welding groove having a depth downward from an upper surface of the terminal.

2. The cylindrical secondary battery as claimed in claim 1, wherein the terminal comprises:
a head located on an upper portion of the upper surface of the case; and
a fastening part extending from a center of the head toward an inside of the case and integrally formed with the head.

3. The cylindrical secondary battery as claimed in claim 2, wherein:
(i) the first current collector plate is welded from an outside of the terminal through the welding groove in a state in which the upper surface of the first current collector plate is in contact with a lower surface of the fastening part, such that a welding bead is located in the welding groove,
optionally wherein the first current collector plate has a thickness of 0.2 mm to 1.5 mm; and/or
(ii) a thickness of the fastening part, which is a thickness from a lower surface of the welding groove to a lower surface of the fastening part, is 0.5 mm to 1.5 mm; and/or
(iii) the welding groove passes through the center of the head and is formed downward from an upper portion of the fastening part; and/or
(iv) the head has a larger plane size than the fastening part.

4. The cylindrical secondary battery as claimed in claim 2 or claim 3, wherein the fastening part comprises:
an upper fastening part connected to the head and located in a terminal hole of the upper surface of the case; and
a lower fastening part extending downward from the upper fastening part and located inside the case.

5. The cylindrical secondary battery as claimed in claim 4, wherein:
(i) the lower fastening part has a larger outer diameter than the upper fastening part; and/or
(ii) the lower fastening part has a smaller outer diameter than the upper fastening part, and a groove is provided on an outer surface of the lower fastening part in an inward direction,
optionally further comprising a coupling member inserted into and coupled to the groove provided on the outer surface of the lower fastening part; and/or
(iii) the lower fastening part has a larger side portion thickness than the upper fastening part.

6. The cylindrical secondary battery as claimed in any one of claims 2 to 5, wherein the side portion thickness of the fastening part is larger than a lower portion thickness of the fastening part; and/or wherein a thickness of the first current collector plate is smaller than a lower portion thickness of the fastening part.

7. The cylindrical secondary battery as claimed in any one of claims 2 to 6, further comprising a first gasket between the terminal and the case,
optionally wherein:
(i) the first gasket extends between the head and the upper surface of the case, and an end of the first gasket protrudes further than the head; and/or
(ii) the first gasket is in contact with the upper surface of the case and a lower surface of the terminal.

8. The cylindrical secondary battery as claimed in any one of claims 2 to 7, further comprising an outer insulation member between the head of the terminal and the upper surface of the case,
optionally wherein an end of the outer insulation member protrudes further than the head.

9. The cylindrical secondary battery as claimed in any one of claims 1 to 8, wherein
(i) a lower surface of the terminal is a flat plane; and/or
(ii) a central region of a lower surface of the terminal protrudes inward relative to an edge region thereof,
optionally wherein the central region of the lower surface of the terminal is a flat plane; and/or
(iii) the welding groove has an upper inner diameter larger than a lower inner diameter,
optionally wherein, in the welding groove, the upper inner diameter is 2 mm to 5 mm, and the lower inner diameter is 0.5 mm to 2 mm.

10. The cylindrical secondary battery as claimed in any one of claims 1 to 9, wherein the case comprises:
a beading part which is recessed into the case at an upper portion of the cap plate; and
a crimping part in which the lower end of the case is bent inward to fix the cap plate at a lower portion of the cap plate,
optionally further comprising a second gasket between the cap plate and the beading part and between the cap plate and the crimping part, wherein the cap plate is non-polar,
further optionally wherein a lower end of the second gasket protrudes more toward a center of the cap plate than the crimping part.

11. The cylindrical secondary battery as claimed in any one of claims 1 to 10, further comprising a second current collector plate, which has a circular plate shape corresponding to a lower surface of the electrode assembly and being in contact with and electrically connected to the second electrode plate exposed to the lower surface of the electrode assembly.

12. The cylindrical secondary battery as claimed in claim 11, wherein the second current collector plate comprises:
a circular planar portion contacting the lower surface of the electrode assembly; and
an extension portion extending downward from an edge of the planar portion,
optionally wherein:
(i) the extension portion of the second current collector plate is between the second gasket and the beading part; and/or
(ii) the extension portion of the second current collector plate is bent or rounded along the beading part; and/or
(iii) the second current collector plate has a hole penetrating between an upper surface and a lower surface at a center of the planar portion.

13. The cylindrical secondary battery as claimed in claim 10, or claim 11 or claim 12 as dependent on claim 10, wherein the cap plate comprises an edge region between the crimping part and the beading part, and a central region that is concave toward an inside of the case relative to the edge region,
optionally wherein the cap plate comprises a vent, which is a notch formed in an upper direction from a lower surface in the central region,
further optionally wherein a thickness of the vent is smaller than thicknesses of other regions of the cap plate and is in a range of 0.05 mm to 0.35 mm; and/or wherein the vent has one or more patterns in which a planar shape has a ring shape, a straight-line shape, or a curve shape, spaced from the center.

14. The cylindrical secondary battery as claimed in any one of claims 1 to 13, wherein the case comprises: an upper surface portion shaped of a flat plate and having a terminal hole passing through a central portion; and a side surface portion extending downward from an edge of the upper surface portion,
optionally further comprising an inner insulation member covering an inner surface of the upper surface portion of the case,
further optionally wherein:
(i) the inner insulation member has a larger plane size than the first current collector plate; and/or
(ii) the case further comprises a bent portion bent in a rounded shape between the upper surface portion and the side surface portion, optionally wherein the inner insulation member covers an inner surface of the upper surface portion and an inner surface of the bent portion.

15. The cylindrical secondary battery as claimed in any one of claims 1 to 14, wherein, in the electrode assembly, a positive electrode uncoated portion that is not coated with a positive electrode active material protrudes upward from the first electrode plate, and a negative electrode uncoated portion that is not coated with a negative electrode active material protrudes downward from the second electrode plate,
optionally wherein the electrode assembly comprises a step that is concave at outermost parts of upper and lower portions relative to other regions.
